# EUROPEAN PATENT SPECIFICATION

(11) **EP 2 168 791 B1**
(45) Date of publication and mention of the grant of the patent: **16.03.2011**
(21) Application number: 09012032.0
(22) Date of filing: 22.09.2009
(51) Int. Cl.: B60H 1/00, B60H 3/00

(54) **Electrostatically atomizing kit for use in a vehicle**
Bausatz mit einem elektrostatischen Zerstäuber für den Einbau in ein Fahrzeug
Kit d'atomisation électrostatique à monter dans un véhicule

(30) Priority: 25.09.2008 JP 2008246950
(43) Date of publication of application: 31.03.2010
(73) Proprietor: Panasonic Electric Works Co., Ltd., Kadoma-shi Osaka (JP)
(72) Inventor: Yano, Takeshi, Kadoma-si Osaka (JP); Seto, Shinjirou, Kadoma-si Osaka (JP)
(74) Representative: Appelt, Christian W.

(56) References cited:
- WO-A-2008/016180
- US-A- 1 642 292
- US-A1- 2004 113 468

## Description

### TECHNICAL FIELD

The present invention relates to an electrostatically atomizing kit for use in a vehicle, and more particularly to a kit for providing a system of discharging a mist of charged minute water particles into a passenger's room of a vehicle as being carried on a conditioned air for effectively concentrating the mist on a particular object in the passenger's room.

### BACKGROUND OF THE INVENTIONS

WO 2008/016180 A1 discloses as closest prior art an air conditioning device for a vehicle which is designed to supply a mist of charged minute water particles into a passenger's room as being carried on a conditioned air generated by an air conditioning system of the vehicle. The device includes an atomizing unit with an emitter electrode which is cooled to condense the water from within the surrounding air, and a high voltage source applying a high voltage to the emitter electrode for electrostatically atomizing the water into charged minute water particles in the form of a mist. The atomizing unit is disposed to carry the mist on the conditioned air flowing into the passenger's room through a blow port disposed, for example, in an instrument panel of the vehicle. Such mist is known to contain radicals which remain over a long period of time when diffused in a large amount and react effectively with offensive odors for deodorizing the passenger's room and/or deactivating allergens introduced in the room. Especially, the mist is expected to deodorize a particular object such as shoes and clothing of the passenger and deactivate the allergens adhered thereto. However, the blow port in the instrument panel is normally designed to direct the conditioned air to the passenger's face or the body, and is not sufficient to concentrate the mist carrying conditioned air to the shoes, the clothing taken off the passenger, or an umbrella with water droplets of unpleasant odor. Accordingly, it has been demanded to concentrate the mist carrying conditioned air to a particular kind of the object in an effective manner depending upon the kind of the object.

### DISCLOSURE OF THE INVENTION

In view of the above problem, the present invention has been achieved to provide an electrostatically atomizing kit for use in a vehicle which is capable of effectively concentrating the mist carrying conditioned air in an effective manner depending upon the kind of the object to deodorize the object and/or deactivate allergens adhered to the object. The electrostatically atomizing kit in accordance with the present invention is adapted in use with the vehicle equipped with an air conditioning system having a ventilation duct configured to blow a conditioned air into a passenger's room through a blow port. The kit includes an atomizing unit having an emitter electrode, a water-supply means for supplying water to the emitter electrode, a high voltage source, and a discharge port. The high voltage source is provided to apply a high voltage to the water on the emitter electrode so as to electrostatically atomize the water into charged minute water particles in the form of a mist, which is discharged out through the discharge port. A mist feeding duct extends from the discharge port and is coupled to the ventilation duct upstream of the blow port so as to carry the mist on the conditioned air flowing through the ventilation duct, thereby producing a mist carrying conditioned air blowing out through the blow port. The kit includes a plurality of deflector ducts selectively detachable to the blow port. The deflector ducts are differently shaped to each other to deflect the mist carrying conditioned air in different directions. With this arrangement, it is possible to concentrate the mist carrying conditioned air to a desired local spot for deodorization of the object and/or deactivation of the allergens adhered to the object in an effective manner depending upon the location of the object.

Preferably, the kit includes a controller that provides different modes of blowing the conditioned air into the passenger's room at different values of parameter, and a selector configured to select one of the different modes. The parameter is selected from at least one of a blowing rate, temperature and humidity of the conditioned air. Accordingly, the mist carrying conditioned air can be regulated at an optimum state for effective deodorization of the object and/or deactivation of the allergens.

Further, each of the deflector ducts may be provided at its downstream end with a louver for varying the direction of the mist carrying conditioned air directed to the passenger's room. With the provision of the louver, it is possible to make a precise adjustment for deflecting the mist carrying conditioned air to the object.

These and still other objects and advantageous features of the present invention will become more apparent from the following detailed description when taken in conjunction with the attached drawings.

### BRIEF DESCRIPTION OF THE DRAWINGS

FIG. 1 is a schematic view illustrating an electrostatically atomizing kit for use in a vehicle in accordance with a preferred embodiment of the present invention;
FIG. 2 is schematic view illustrating an atomizing unit added to an air conditioning system of the vehicle for supplying a mist of charged minute water particles;
FIG. 3 is a schematic view illustrating a mist feeding duct for feeding the mist to a ventilation duct of the air conditioning system;
FIG. 4 is a sectional view of the atomizing unit employed in the above kit to generate the mist;
FIG. 5 is a perspective view illustrating a deflector duct employed in the above kit to be attached to a blow port in an instrument panel of the vehicle;
FIG. 6 is a schematic view illustrating the use of another deflector duct;
FIG. 7 is a perspective view illustrating the deflector duct employed in the instance of FIG. 6;
FIG. 8 is a schematic view illustrating the use of a further deflector duct;
FIG. 9 is a perspective view illustrating the deflector duct employed in the instance of FIG. 8;
FIG. 10 is a front view of the blow port;
FIG. 11 is a sectional view of a connection of the deflector duct to the blow port.

### BEST MODE FOR CARRYING OUT THE INVENTION

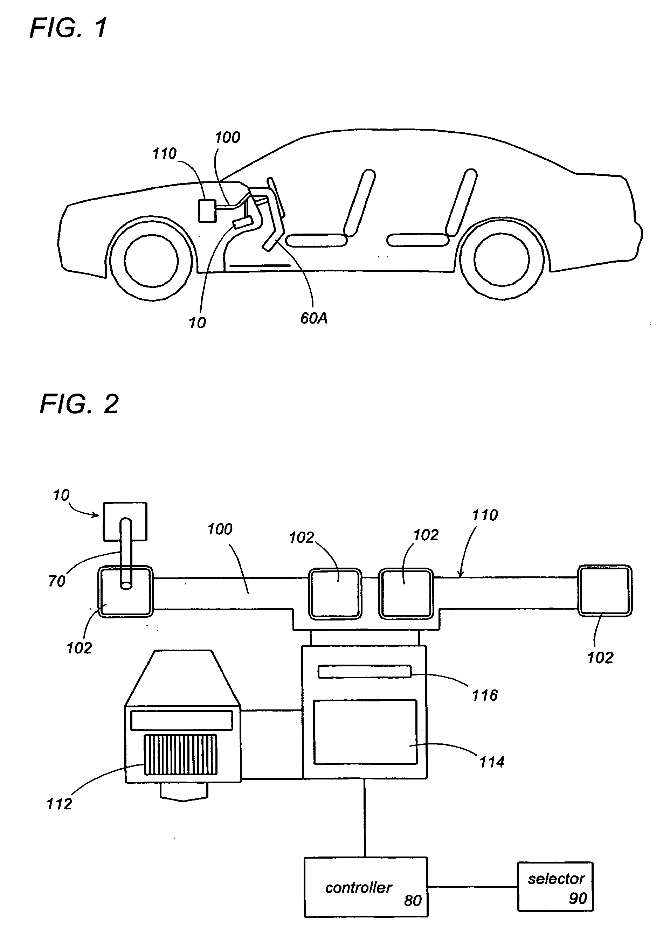

Referring now to FIGS. 1 and 2, there is shown an electrostatically atomizing kit for use in a vehicle in accordance with the present invention. The kit is adapted to the vehicle equipped with an air conditioning system **110** having a ventilation duct **100,** a blower **112** drawing in an outside fresh air or a room air into the ventilation duct **100,** and a combination of a heat exchanger **114** and a heater **116** disposed downstream of the blower **112** to generate a conditioned air to be blown through the ventilation duct **100** into the passenger's room through a plurality of blow ports **102** located in the passenger's room.

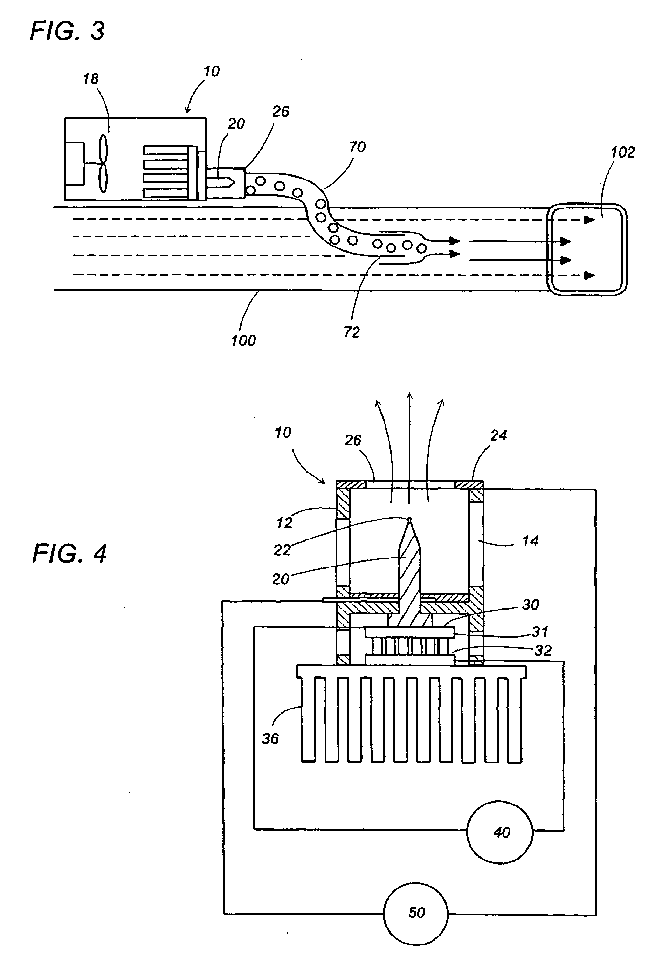

The kit includes an atomizing unit **10,** a mist feeding duct **70,** and a plurality of deflector ducts **60A, *60B,** and **60C.** The atomizing unit **10** is configured to take water from the surrounding air by condensation, and electrostatically atomize it into charged minute water particles to generate a mist of the particles which is discharged out of the atomizing unit **10** and is fed into the ventilation duct **100** by way of the mist feeding duct **70,** as shown in FIG. 3, whereby the mist carrying conditioned air is blown out into the passenger's room through one of the blow ports **102.** As discussed later, the deflector ducts **60A, 60B,** and **60C** are provided to be detachable to the one blow port **102** in order to deflect the mist carrying conditioned air in predetermined directions.

As shown in FIG. 4, the atomizing unit **10** includes a cylindrical barrel **12** carrying an emitter electrode **20** projecting through a bottom of the barrel **12,** and an opposed electrode **24** which is disposed in an opposite relation to the emitter electrode **20.** The oppose electrode **24** is shaped from an electrically conductive substrate with a circular opening **26** which has an inner periphery spaced by a predetermined distance from a discharge end **22** at the tip of the emitter electrode **20** to define a discharge port of discharging the mist. The atomizing unit **10** includes cooling means **30** and a high voltage source **50.** The cooling means **30** is coupled to cool the emitter electrode **20** in order to condense the water content carried in the surrounding air on the emitter electrode **20,** thereby supplying the water thereto. The high voltage source **50** is provided to apply a high voltage across the emitter electrode **20** and the opposed electrode **24** so as to charge the water on the emitter electrode **20** and atomize it into the charged minute water particles to be discharged out through the discharge port **26** in the form of the mist. The cooling means **30** is realized by a Peltier module having a cooling side coupled to the emitter electrode **20** at its one end away from the discharge end **24,** and having thermo-electric elements which, upon being applied with a predetermined voltage, cools the emitter electrode to a temperature below a dew point of the water. The Peltier module has a plurality of thermo-electric elements arranged in parallel with each between thermal conductors **31** and **32** to cool the emitter electrode **20** at a cooling rate determined by a variable voltage given from a cooling electric source circuit **40.** One thermal conductor **31** defining the cooling side is coupled to the emitter electrode **20,** while the other thermal conductor **32** defining the heat radiation side is provided with a heat radiator **36.** The Peltier module is fixed between the bottom of the barrel **12** and the heat radiator **36** with its cooling side conductor **31** in heat transfer contact with a root of the emitter electrode **20.** The high voltage source **50** includes a high voltage generation circuit which applies a predetermined high voltage across the emitter electrode **20** and the grounded opposed electrode **20** to give a negative or positive voltage (for example, - 4.6 kV) to the emitter electrode **20,** thereby generating the mist of the charged minute water particles of nanometer size. The resulting mist includes radicals effective for removing unpleasant odor from the object and/or deactivating allergens adhered to the object. The atomizing unit **10** is mounted behind an instrument panel **120** with its opening **14** in the side wall of the barrel connected to take the room air for condensation of the water contained in the air at the emitter electrode **20.**

The mist feeding duct **70** extends behind the instrument panel **120** from the discharge port **26** of the atomizing unit **10** and has a coupling end **72** which is configured to be coupled to the ventilation duct **100** immediately upstream of one of the blow ports **102** in order to feed the mist to the conditioned air flowing through the ventilation duct **100** so that the mist is discharged out through the blow port **102** into the passenger's room as being carried on the conditioned air flow. The mist feeding duct **70** is shaped to have its coupling end bent along the ventilation duct **100** for guiding the mist along the flow of the conditioned air. Preferably, the duct **70** is made flexible for easy connection to the ventilation duct **100.** As shown in FIG. 3, the atomizing unit **10** includes a fan **18** which generates a forced air flow of supplying the room air to the emitter electrode **20** for condensation thereat and also of feeding the mist into the ventilation duct **100** through the mist feeding duct **70** into the ventilation duct **100.** In this connection, a controller **80** is included in the kit to regulate the fan **18** to vary the flow rate of the mist being flown into the ventilation duct in accordance with the flow rate of the conditioned air flowing through the ventilation duct **100.** For this purpose, the controller **60** is connected to receive a signal from a speed monitor (not shown) that monitors a rotating speed of the blower **112** included in the air-conditioning system **110** to flow the conditioned air through the ventilation duct **100,** and is configured to drive the fan **18** for flowing the mist out through the mist feeding duct **70** at a flow rate in match with the flow rate of the conditioned air, facilitating to carry the mist on the conditioned air for successfully spreading the mist into the passenger's room.

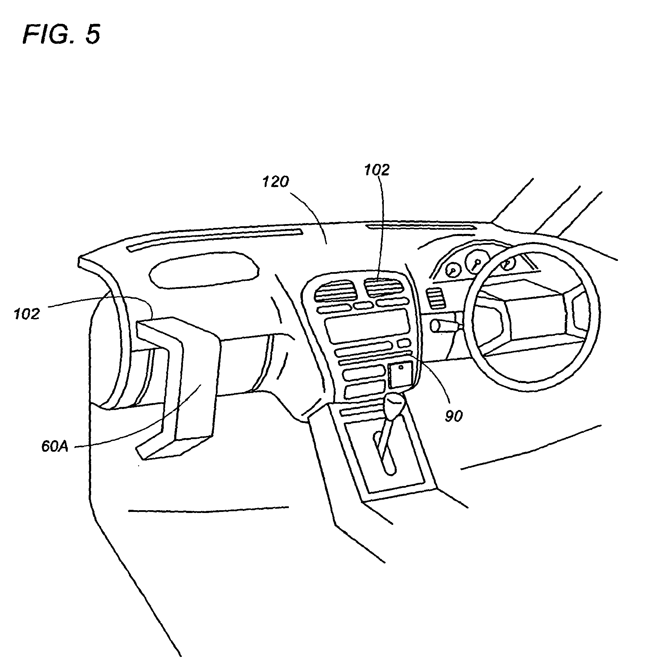

The deflector ducts **60A, 60B,** and **60C** are each configured to be detachable to the blow port **102,** e.g., at the left end of the instrument panel **120** adjacent to a navigator's seat, and are differently shaped or bent to deflect the mist carrying conditioned air in directions different from each other. FIG 5 illustrates one particular kind of the deflector duct **60A** which is U-shaped to the mist carrying conditioned air (hereinafter sometimes refer to simply as "mist carrying air") toward the floor below the instrument panel **120.** Although not shown in FIG. 5, the deflector duct **60A** is formed at its one end with a pair of hooks detachable engaged with a corresponding pair of notches around the blow port. With the selective use of the deflector duct **60A,** the mist carrying air is guided in a concentric manner towards the shoes of the passengers or the like object positioned on the floor below the instrument panel **120** for deodorization of the object and/or the deactivation of allergens adhered thereto.

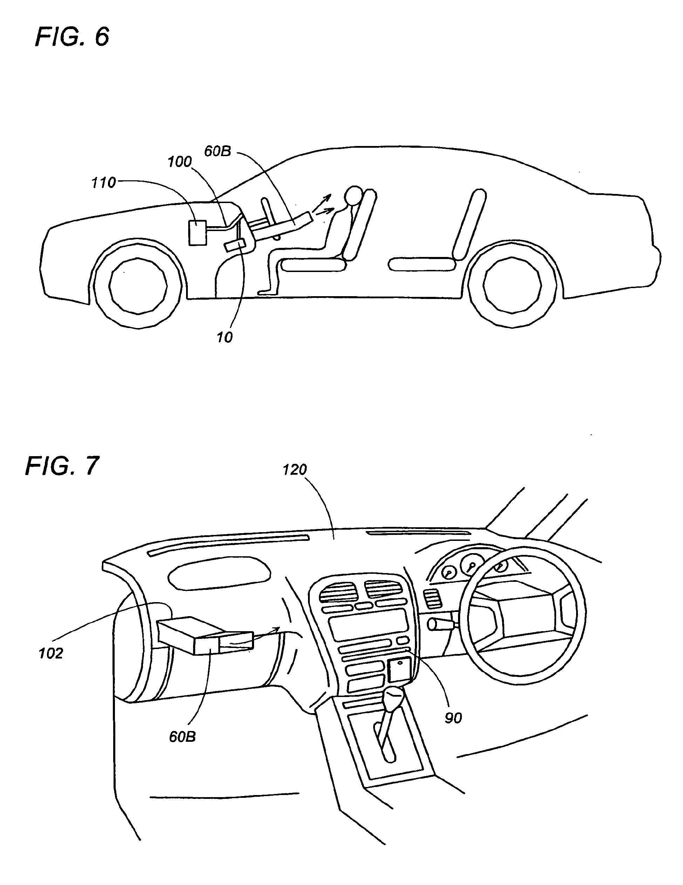

FIGS. 6 and 7 illustrate the use of another deflector duct **60B** which is shaped to deflect the mist carrying air towards the passenger's head for facilitating the deodorization of the hairs while adding humidity to the hairs..

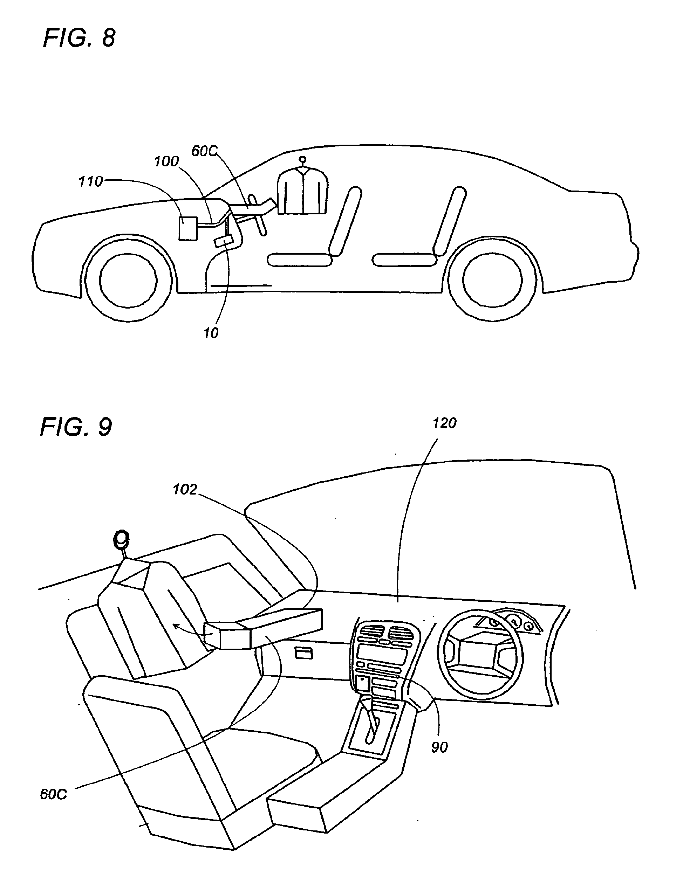

FIGS. 8 and 9 illustrate the use of a further deflector duct 60C which is shaped to deflect the mist carrying air laterally and upwardly towards a side window on the side of a navigator seat for deodorization of a jacket or the like clothing suspended from an inside roof along the side window and/or deactivation of allergens adhered thereto.

The deflector ducts are not limited to the above shapes and may include further one of differently shape or configuration, for example, a deflector duct shaped to deflect the mist carrying air downward and sideward for deodorization of a wet umbrella put on the floor adjacent to a passenger's door. Further, it is possible to include a deflector duct in the form of a flexible bellows capable of varying a direction of deflecting the mist carrying air.

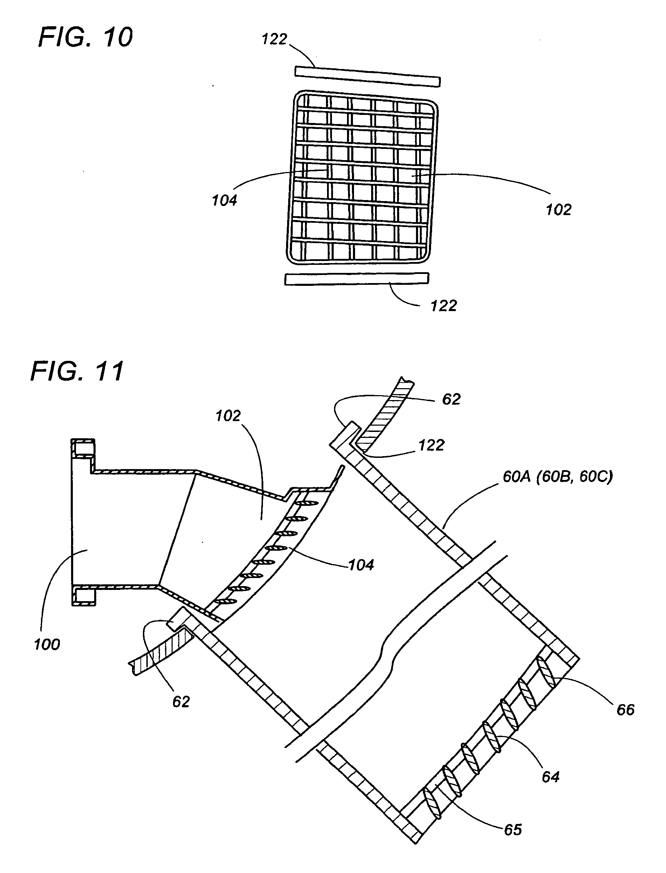

As shown in FIGS. 10 and 11, each of the deflector ducts **60A, 60B,** and **60C** is formed at its one lengthwise end with a pair of hooks **62** for detachable engagement into a corresponding pair of notches **122** on opposite sides of the blow port **102.** Thus, the deflector duct can be easily attached to and detached from a portion of the instrument panel around the blow port **102.** Further, the deflector duct is provided at its distal lengthwise end with a louver **64** having a like configuration of a louver **104** provided in the opening of the blow port **102,** namely, being composed of an array of vertical slats **65** and horizontal slats **66.**

The controller **80** is adapted in use to be electrically connected to an electrical circuitry of the air conditioning system **110** for controlling the blower **112,** the heat exchanger, and the heater **116** in order to provide different modes of blowing the mist carrying air into the passenger's room at different parameters including a blowing rate, temperature, and humidity. The modes include a first mode, a second mode, and a third mode which are associated respectively with the use of the deflector ducts **60A, 60B,** and **60C,** and are configured to blow the mist carrying air in optimum conditions for the deodorization and/or the deactivation of allergens. The selection of the modes is made at a selector **90** which is arranged on the instrument panel **120** to be accessible by the passengers.

Although the above embodiment illustrates that the mist generated at the atomization unit **10** is flown out through only one of the blow ports **102,** the present invention should not be limited to this particular embodiment, and may encompass a modification where the mist is fed to the ventilation duct **100** at a plurality of points respectively immediately behind the individual blow ports **120** by use of the mist feeding duct having a manifold coupling for connection with the plural points of the ventilation duct.

Further, in the above illustrated embodiment, the atomizing unit **10** is configured to include the opposed electrode **24** in front of the emitter electrode **20.** It should be noted that the opposed electrode **24** is only preferable for controlling a flow direction of the mist, but is not an essential element for generating the mist. For example, the high voltage may be alternatively applied to the emitter electrode **20** as being grounded to a part of the mist feeding duct **70,** the room air intake duct **80,** the ventilation duct **100,** fixture housing **18,** or any other surrounding object.

In addition, the atomizing unit **10** may be configured to include a water supply tank for feeding the water to the emitter electrode **20** by use of a capillary effect, instead of the cooling means **30.**

## Claims

1. An electrostatically atomizing kit for use in a vehicle equipped with an air conditioning system (110) having a ventilation duct (100) blowing a conditioned air into a passenger's room through a blow port (102), said kit comprising:
an atomizing unit (10) having an emitter electrode (20), a water-supply means (30) for supplying water to said emitter electrode, a high voltage source (50), and a discharge port (26), said high voltage source applying a high voltage to said emitter electrode so as to electrostatically atomize the water on the emitter electrode into charged minute water particles in the form of a mist, which is discharged out through said discharge port; and
a mist feeding duct (70) extending from said discharge port of the unit and adapted to be coupled to said ventilation duct upstream of said blow port so as to carry the mist on the conditioned air flowing through said ventilation duct, thereby producing a mist carrying conditioned air blown through said blow port;
**characterized in that** said kit comprises a plurality of deflector ducts (60A, 60B, 60C) selectively attachable to said blow port, said deflector ducts being differently shaped to each other to deflect the conditioned air carrying said mist in different directions.

2. An electrostatically atomizing kit as set forth in claim 1, further including a controller (80) configured to provide different modes of blowing the mist carrying conditioned air into the passenger's room at different values of parameter, said parameter being selected from at least one of a blowing rate, temperature and humidity of said conditioned air, and a selector (90) configured to select one of said different modes.

3. An electrostatically atomizing kit as set forth in claim 1 or 2, wherein each of said deflector ducts is provided at its downstream end with a louver (64) for varying the direction of the mist carrying conditioned air directed to the passenger's room.

## Patentansprüche

1. Elektrostatischer Zerstäuberausrüstung zur Verwendung in einem Fahrzeug, welches mit einer Klimaanlage (110) mit einem Ventilationskanal (110) ausgerüstet ist, um klimatisierte Luft in einen Fahrgastraum über eine Ausblasöffnung (102) zu blasen, wobei die Zerstäuberausrüstung Folgendes umfasst:
eine Zerstäubereinheit (10) mit einer Emitterelektrode (20), einem Wasserversorgungsmittel (30) zum Versorgen der Emitterelektrode mit Wasser, einer Hochspannungsquelle (50) und einer Auslassöffnung (26), wobei die Hochspannungsquelle eine Hochspannung für die Emitterelektrode bereitstellt, so dass eine elektrostatische Zerstäubung von Wasser an der Emitterelektrode in geladene winzige Wasserteilchen in Form eines Nebels erfolgt, welcher über die Auslassöffnung freigegeben wird; und
einen Nebelzuführungskanal (70), der sich von der Auslassöffnung der Einheit erstreckt und ausgebildet ist, um an die Ventilationskanal stromaufwärts von der Ausblasöffnung gekoppelt zu werden, so dass der Nebel mit der klimatisierten Luft in dem Ventilationskanal weiter geleitet wird, um **dadurch** eine mit Nebel versetzte klimatisierte Luft zu erzeugen, die durch den Ausblassöffnung geblasen wird;
**dadurch gekennzeichnet, dass** die Zerstäuberausrüstung mehrere Ablenkkanäle (60A, 60B, 60C) aufweist, die selektiv an der Ausblassöffnung anbringbar sind, wobei die Ablenkkanäle unterschiedlich gestaltet sind, um die klimatisierte Luft mit dem Nebel in unterschiedliche Richtungen zu leiten.

2. Elektrostatische Zerstäuberausrüstung nach Anspruch 1, weiter umfassend
eine Steuerung (80), die ausgebildet ist, um unterschiedliche Moden zum Blasen der mit Nebel versetzten klimatisierten Luft in den Passagierraum für unterschiedliche Werte von Parametern bereitzustellen, wobei die Parameter von zumindest einem aus den Folgenden ausgewählt sind: die Blasstärke, Temperatur und Feuchtigkeit der klimatisierten Luft, und
einen Selektor (90), der ausgebildet ist, um eine der unterschiedlichen Moden auszuwählen.

3. Elektrostatische Zerstäuberausrüstung nach Anspruch 1 oder 2, wobei jede der Ablenkkanäle an ihrem stromabwärtigen Ende mit einem Leitgitter (64) ausgebildet ist, um die Richtung der mit Nebel versetzten klimatisierten Luft in den Passagierraum zu variieren.

## Revendications

1. Kit d'atomisation électrostatique destiné à être utilisé dans un véhicule équipé d'un système de conditionnement d'air (110) ayant une conduite de ventilation (100) soufflant un air conditionné dans une compartiment de passagers par le biais d'un orifice de soufflage (102), ledit kit comprenant :
une unité d'atomisation (10) ayant une électrode émettrice (20), des moyens d'alimentation d'eau (30) pour alimenter l'eau à ladite électrode émettrice, une source de haute tension (50) et un orifice de décharge (26), ladite source de haute tension appliquant une haute tension sur ladite électrode émettrice afin d'atomiser de manière électrostatique l'eau sur ladite électrode émettrice en minuscules particules d'eau chargées se présentant sous la forme d'une brume, qui est déchargée par ledit orifice de décharge ; et
une conduite d'alimentation de brume (70) s'étendant à partir dudit orifice de décharge de l'unité et adaptée pour être couplée à ladite conduite de ventilation en amont dudit orifice de soufflage afin de transporter la brume sur l'air conditionné s'écoulant par ladite conduite de ventilation, produisant ainsi un air conditionné de transport de brume soufflé par ledit orifice de soufflage;
**caractérisé en ce que** ledit kit comprend une pluralité de conduites de déflecteur (60A, 60B, 60C) pouvant être sélectivement fixées sur ledit orifice de soufflage, lesdites conduites de déflecteur étant formées différemment les unes des autres pour dévier l'air conditionné transportant ladite brume dans différentes conditions.

2. Kit d'atomisation électrostatique selon la revendication 1, comprenant en outre un contrôleur (80) configuré pour fournir différents modes de soufflage de l'air conditionné de transport de brume dans le compartiment de passagers à différentes valeurs de paramètre, ledit paramètre étant sélectionné à partir d'au moins l'un parmi une vitesse de soufflage, la température et l'humidité dudit air conditionné, et
un sélecteur (90) configuré pour sélectionner l'un desdits différents modes.

3. Kit d'atomisation électrostatique selon la revendication 1 ou 2 dans lequel chacune desdites conduites de déflecteur est prévue au niveau de son extrémité en aval avec un volet (64) pour modifier la direction de l'air conditionné de transport de brume dirigé vers le compartiment de passagers.
